# EUROPÄISCHE PATENTSCHRIFT

(11) **EP 0 324 332 B1**
(45) Veröffentlichungstag und Bekanntmachung des Hinweises auf die Patenterteilung: **24.03.1993**
(21) Anmeldenummer: 88890319.2
(22) Anmeldetag: 14.12.1988
(51) Int. Cl.: F16N 11/00, B65G 45/02

(54) **Vorrichtung zum Schmieren von Kettenbolzen**
Lubricating device for chain pins
Dispositif de graissage de boulons de chaîne

(30) Priorität: 14.12.1987 AT 3284/87
(43) Veröffentlichungstag der Anmeldung: 19.07.1989
(73) Patentinhaber: "NEUSON" Hydraulik Gesellschaft m.b.H. u. Co. KG, A-4061 Pasching (AT)
(72) Erfinder: Neissl, Maximilian, A-4175 Herzogsdorf (AT)
(74) Vertreter: Hübscher, Heiner, Dipl.-Ing.

(56) Entgegenhaltungen:
- EP-A- 0 274 559
- DE-C- 710 004
- GB-A- 724 347
- US-A- 2 905 271
- US-A- 3 353 630

## Beschreibung

Die Erfindung betrifft eine Vorrichtung zum Schmieren von sind langsam entlang einer Linie bewegenden, z.B. von Schmiernippeln gebildeten Abschmierstellen, gemäß dem Oberbegriff des Patentanspruches 1.

Eine diese Merkmale aufweisende Schmiervorrichtung für die Achsen der Räder von gleisgebundenen Schienenfahrzeugen ist aus der US-A- 2 905 271 bekannt. Dabei können sich die Schmierstellen praktisch nur mit gleichförmiger Geschwindigkeit auf einer geraden, horizontalen Linie in einer vorbestimmten Richtung fortbewegen und es steht ausreichend Platz zur Verfügung, um die Einrichtungen der Schmiervorrichtung, insbesondere die Fettpresse, Lagefühler und Schlitten unterzubringen, wobei auch hinreichend Raum zur Verfügung steht, um den entsprechenden Teilen des Schienenfahrzeuges beim Rücklauf auszuweichen.

Völlig andere Bedingungen herrschen bei Schmiervorrichtungen, wie sie für Ketten und insbesondere zum Schmieren der Kettenbolzen von Schleiferketten für Holzschleifmaschinen in der Papierindustrie zum Einsatz kommen. Überdies soll dort nicht nur die Aufgabe der Reibungsverminderung durch die Schmierung gelöst werden, sondern man will auch einen Schutz der aufeinander gleitenden Teile von Kette und Bolzen gegen das Eindringen agressiver Medien erreichen. Es ist deshalb anzustreben, eine häufige Schmierung vorzusehen und bei der Einzelschmierung nur die Verluste, die bei einem Kettenumlauf aufgetreten sind, auszugleichen. Die Fortbewegungsgeschwindigkeit bei Schleiferketten liegt in der Größenordnung von 1 bis 10 m/h.

Bei einer für Schleiferketten bekannten Schmiervorrichtung ist ein einziger, von der Seite her, also quer zur Fortbewegungslinie der Kettenbolzen anstellbarer Anschlagfühler vorgesehen, der mit dem Außenrand eines vorbeigeführten Kettenbolzens in Eingriff kommt und entweder unmittelbar oder über zugeordnete, elektrische Schalter ein Pneumatikventil betätigt, das den Schmierkopf anstellt und die Fettpresse betätigt. Der Schmierkopf ist hier über ein kardanisches Gelenk mit einem Pneumatikzylinder antriebsverbunden und auf einer Rolle zusätzlich gelagert. Er wird über den Pneumatikzylinder verstellt, wobei eine zusätzliche Steuereinrichtung ein in einer Schmiermittelleitung liegendes Ventil betätigt, so daß bei an die Schmierstelle angestelltem Schmierkopf eine dosierte Schmiermittelabgabe erfolgt. Die Schmiervorrichtung muß möglichst auf einem vorhandenen Teil der mit der Kette versehenen Schleifvorrichtung angebracht werden und ist deshalb platzsparend auszulegen. Die kardanische Abstützung des Schmierkopfes ist vorgesehen, um Lageabweichungen der Schmierstelle von einer Sollstelle auszugleichen, es ergeben sich aber nur kurze Schmiertakte, weil sich die Schmierstelle nur eine kurze Zeitspanne im Zielbereich des Schmierkopfes befindet. Durch Anstellungenauigkeiten und wegen der schnellen Anstellung des Schmierkopfes unter hohem Druck kommt es zum starken Verschleiß der Schmiernippel am Kettenbolzen. Bei Abweichungen der tatsächlichen Bewegungslinie der Kettenbolzen, die auf Grund der Kettenführungen möglich sind, von einer gedachten Ideallinie und bei Fehlsteuerungen infolge von Verunreinigungen der Kettenbolzen im Eingriffsbereich des Fühlers wird das Schmiermittel nicht in den Schmiernippel, sondern daneben abgegeben und bewirkt lediglich eine Verschmutzung. Aus diesen Gründen sind die bekannten automatischen Schmiervorrichtungen für Schleiferketten unverläßlich und müssen dauernd beobachtet bzw. gewartet werden.

Weitere Schmiervorrichtungen für horizontal geradlinig bewegte Achsen von Laufrollen von Schienenfahrzeugen u.dgl. sind aus der US-A-3 353 630, der GB-A-724 347 und der DE-C-710 004 bekannt. Aus diesen bekannten Konstruktionen lassen sich keine Anregungen entnehmen, wie eine Schmiervorrichtung für die Schleiferketten von Papiermaschinen auszulegen wäre.

Aufgabe der Erfindung ist es, eine einfache, platzsparende und betriebssichere Schmiervorrichtung für Kettenbolzen, insbesondere die Kettenbolzen von Schleiferketten von Papiermaschinen anzugeben, bei der auch Abweichungen des Bewegungsverlaufes der Abschmierstellen von einer gedachten Ideallinie tolerierbar sind sowie bei einem Kettenrücklauf keine Beschädigungsgefahr für Schmiervorrichtung und Schmierstellen gegeben ist.

Die gestellte Aufgabe wird durch die im Patentanspruch 1 angegebenen Merkmale gelöst.

Der Schmierkopf wird in einer eindeutig definierten Relativlage an die jeweilige Schmierstelle angestellt, wobei mit einer relativ niedrigen Anstellgeschwindigkeit gearbeitet werde kann, so daß die Schmierstellen weitgehend geschont werden. Über die Zentrierrollen wird auch bei Abweichungen des Kettenbolzens vom gedachten Idealweg eine einwandfreie Zentrierung des Schmierkopfes auf die Schmierstelle erzielt, wobei mit einfachen und platzsparenden Elementen nicht nur diese Zentrierung, sondern auch der Schmierweg und der Freigabebereich bestimmt werden. Der Schmierweg verläuft zwar von unten nach oben, muß aber nicht unbedingt eine gerade Linie sein, sondern kann einer Kurve oder einem Kreisbogen folgen. Die schon erwähnten Zentrierrollen bilden nicht nur Zentriereinrichtungen, sondern auch lösbare Kupplungen zur Verbindung des Schlittens mit der Kette über den Schmierweg.

Damit bei dieser Konstruktion Beschädigungen verhindert werden, wenn die Kette in der anderen Laufrichtung bewegt wird, was etwa bei Schleiferketten bei Überlastungen der Schleifvorrichtung manchmal der Fall ist, kann ein vorzugsweise mit einem Puffer versehener, die Ausgangslage des Schlittens bestimmender Anschlag seinerseits durch Federn und Gegenanschläge in der Anschlagstellung gehalten und gegen die Federn aus dieser Lage nach unten verstellbar sein, wobei die Kulissenführungen einen nach unten an den Beginn des Schmierweges anschließenden, zusätzlichen Freigabebereich bestimmen, so daß bei einem Rücklauf der Kette ein Ausweichvorgang möglich ist.

Damit dann, wenn die Kette mit dem Kettenbolzen beim Betrieb möglicherweise nicht der Ideallinie folgt, sondern quer zur Bolzenachse aus dieser Linie abweichen kann, trotzdem eine einwandfreie Schmierung ohne Beschädigungsgefahr für die Schmiervorrichtung und die Schmiernippel gewährleistet bleibt, kann eine den Schlitten abstützende, eine Schlittenverstellung nach oben und unten zulassende Führung ihrerseits in Querrichtung begrenzt verstellbar auf einer Tragkonstruktion abgestützt sein.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigt
- Fig. 1: eine Schmiervorrichtung für Kettenbolzen einer von unten nach oben bewegten Kette in Ansicht von der Kettenseite her gesehen,
- Fig. 2: einen Horizontalschnitt durch die Vorrichtung nach Fig. 1, wobei der Schnitt in der linken Hälfte der Darstellung in der Höhe der Zentrierrolle und in der rechten Hälfte der Darstellung in der Höhe des Lenkerlagers geführt ist,

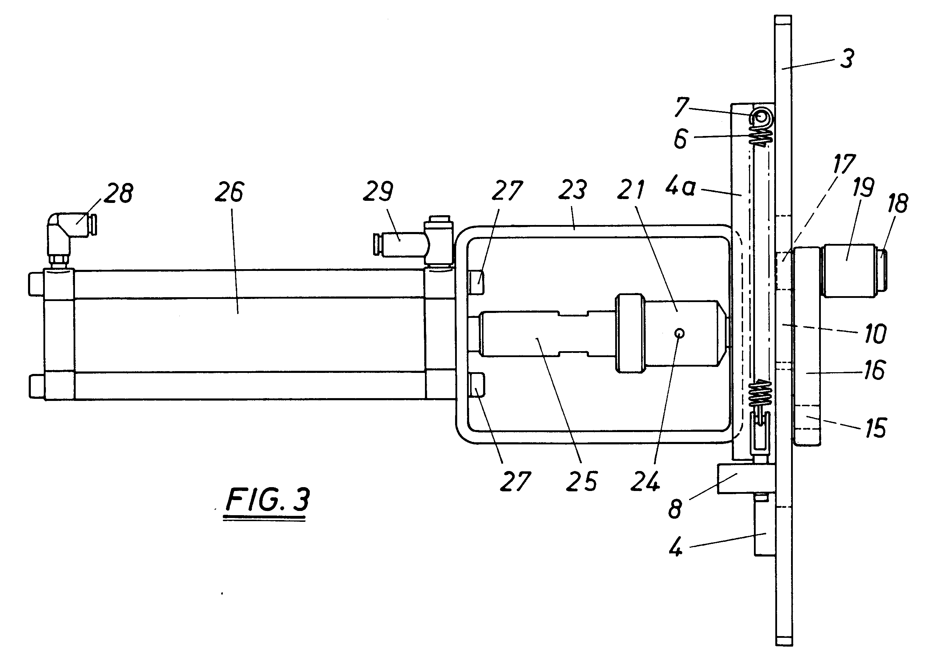

- Fig. 3: eine Seitenansicht zu Fig. 1 und

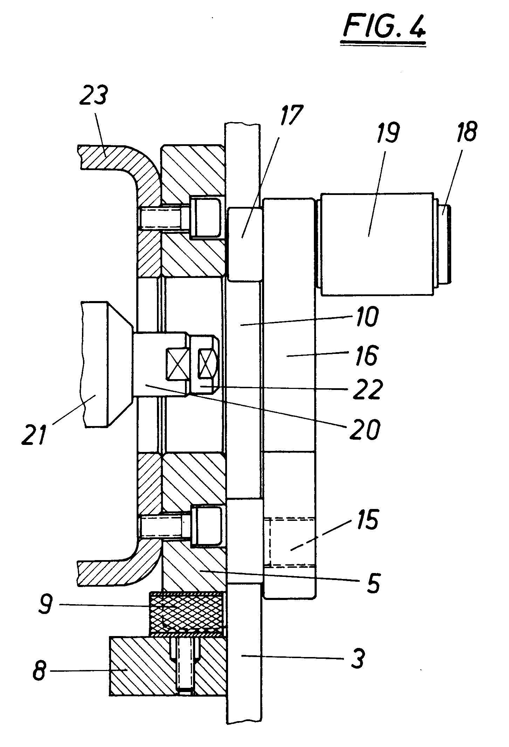

- Fig. 4: einen Vertikalschnitt zu Fig. 1 in einem größeren Maßstab.

Bei einer Laschenkette, beispielsweise einer Schleiferkette für eine Holzschleifvorrichtung in der Papierindustrie, sind in den Kettenbolzen, die seitlich über die Kette überstehen, konzentrische Schmiernippel angebracht. An beiden Seiten der Kette wird je eine Schmiervorrichtung der gegenständlichen Art entlang eines im wesentlichen vertikalen, von unten nach oben verlaufenden Umlaufwegstückes der Kette angebracht.

Jede Vorrichtung besitzt zwei quer zur Kette und seitlich außerhalb des Umlaufweges der Kettenbolzen angeordnete horizontale Führungsschienen 1, 2, in denen eine Tragplatte 3 für die Vorrichtung begrenzt nach vorne und hinten verschiebbar ist, wobei gegebenenfalls Federn vorgesehen sind, die die Platte 3 etwa in der in der Zeichnung dargestellten Lage halten.

Die Platte 3 ist durch Vertikalschienen 4 zu einer Führung für eine Schlitten 5 ergänzt. Außerhalb der Schienen 4 sind Zugfedern 6 angebracht, die sich mit ihren oberen Enden über Querbolzen 7 abstützen und mit ihren unteren Enden einen Querbalken 8 halten, der durch die Federvorspannung von unten gegen durch die Enden der übergreifenden Teile 4a der Schienen 4 gebildete Anschläge gezogen wird. Dieser Balken 8 trägt einen Puffer 9, der in eine Ausnehmung des Schlittens 5 eingreift und der gemeinsam mit den Federn 6 den in die Ausgangs-Wartestellung zurückkehrenden Schlitten 5 weich abfängt. Die Federn 6 lassen unter Krafteinwirkung eine Verstellung des Schlittens 5 aus der Anschlagstellung auch nach unten bis zum Ende der Schienen 4 zu. Die Tragplatte 3 besitzt eine Öffnung 10, deren gegengleich symmetrische Flanken eine Kulissenführung bilden, die einen Schmierwegabschnitt 11, eine oberen Freistellungsabschnitt 12 und einen unteren Freistellungsabschnitt 13 bestimmt, wobei an den Abschnitt 13 ein Öffnungsbereich 14 anschließt, der den Durchtritt von Schwenkzapfen 15 ermöglicht, mit denen zwei gegengleiche Lenker 16 am Schlitten gelagert sind. Die Schwenkzapfen 15 tragen mit den Kulissen 11 bis 14 in Eingriff stehende Führungsrollen 17 und sind am freien Ende mit Achsen 18 versehen, auf denen zwei Zentrierrollen 19 gelagert sind.

Die Lenker 16 schließen miteinander eine Durchtrittsöffnung für die Einführnase 20 eines Schmierkopfes 21 ein, wobei diese Einführnase 20 einen vorderen Anschlagteil 22 trägt, der für den Eingriff in einen Schmiernippel des Kettenbolzens bestimmt ist. Die erwähnte Öffnung zwischen den Zentrierrollen 19 verläuft bei mit dem Kulissenteil 11 in Eingriff stehenden Rollen 17 konzentrisch zur Achse des Schmierkopfes 21 und ist in ihrer Größe auf den Durchmesser des Kettenbolzens abgestimmt, so daß bei der erwähnten Stellung der Rollen 19 ein an den Rollen von unten her anliegender Kettenbolzen mit seiner Achse auf die Schmierkopfachse zentriert ist. Wenn bei umlaufender Kette der erwähnte Fall auftritt, dann nimmt der ankommende Kettenbolzen über die Rollen 19 und die Lenker 16 den Schlitten 5 mit. Dadurch wird auch ein am Schlitten 5 angebrachter Rechteckrahmen 23 mitverstellt, welcher Rahmen 23 der Halterung des Schmierkopfes 21 dient. Der Schmierkopf 21 bildet einen Dosierzylinder, an den eine Schmiermitteleitung über einen Nippel 24 anschließbar ist. Durch Verdrehen eines Betätigungskolbens 25 kann die Füllmenge des Dosierzylinders 21 eingestellt werden. Der Kolben 25 ist mit einem pneumatisch betätigbaren Zylinder-Kolbentrieb 26 antriebsverbunden, der am Rahmen 23 mit Halteschrauben 27 befestigt ist. Über diesen Kolbentrieb, dessen pneumatische Anschlüsse mit 28, 29 bezeichnet wurden, kann der Schmierkopf 21 vor- und zurückverstellt werden und gibt in der Anstellstellung die eingestellte Schmiermittelmenge an den angekuppelten Schmiernippel des Kettenbolzens ab.

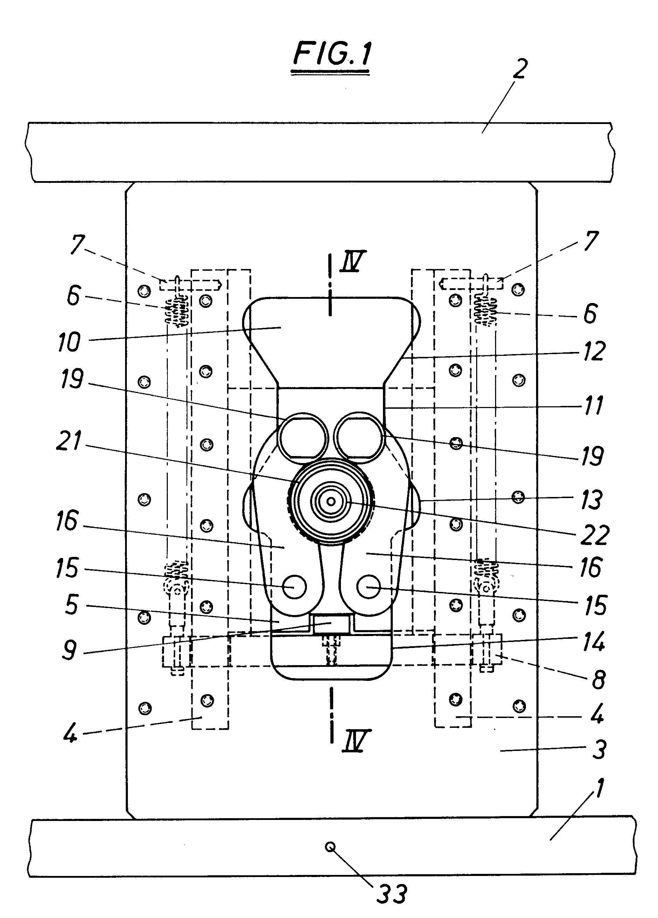

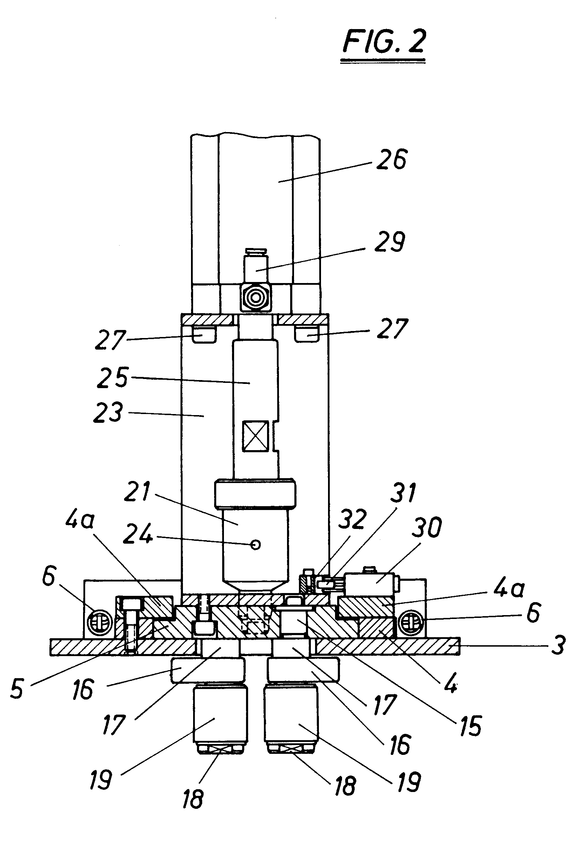

Zur Steuerung des Kolbentriebes 26 sitzt auf der Schiene 4 (Fig. 2) ein Schalter 30 mit Anschlagrolle 31, der anspricht, sobald der Schlitten 5 einen vorgegebenen Weg entlang des Kulissenteiles 11 verstellt wurde. Bei diesem Ansprechen - die Leitungsverbindung zwischen Schalter 30 und Kolbentrieb 26 bzw. den Anschlüssen 28, 29 kann elektrisch oder pneumatisch ausgebildet sein - wird der Schmierkopf 21 angestellt und nach einer durch die Steuerkulisse 32 für die Rolle gegebenen Zeit weider zurückgestellt. Mit dem Einschalten des Kolbentriebes 26 im Anstellsinn wird Luft auch einer Ausblasdüse 33 im Träger 1 zugeführt, so daß der dort befindliche Schmiernippel des nächsten Kettenbolzens durch Abblasen gereinigt wird. Sobald die Rollen 17 die Abschnitte 12 der Kulissenführung erreichen, wird der Schmierkopf 11 zurückgezogen. Die Rollen 17 folgen bei der Weiterverstellung des Schlittens 5 den Kulissenabschnitten 12, so daß schließlich der Kettenbolzen zwischen den Rollen 19 austreten kann. Dadurch wird die Kupplung des Kettenbolzens mit der Schmiervorrichtung gelöst und der Schlitten 5 kehrt in die Ausgangslage nach Fig. 1 zurück, wobei er vom Puffer 9 abgefangen wird.

Wird die Kette im gegenläufigen Umlaufsinn, also mit von oben nach unten bewegten Kettenbolzen angetrieben, dann wird der Schalter 30 nicht betätigt. Der Kettenbolzen trifft von oben auf die Zentrierollen 19 auf und nimmt den Schlitten 5 nach unten mit. Dabei werden die Federn 6 gespannt und der Träger 8 wird nach unten verstellt. Da der Freistellungsweg 13 der Kulissenführung unmittelbar an den Schmierweg 11 anschließt, können die Zentrierrollen 19 nach außen ausweichen und geben schließlich den Kettenbolzen frei, wonach sie durch die Federn 6 gemeinsam mit dem Schlitten 5 in die Ausgangslage nach Fig. 1 zurückgestellt werden.

## Patentansprüche

1. Vorrichtung zur Schmieren von sich langsam entlang einer Linie bewegenden, z.B. von Schmiernippeln gebildeten Abschmierstellen, insbesondere zum Schmieren der Kettenbolzen von Schleiferketten, die aufweist:
- eine Fettpresse (21, 25, 26), deren Schmierkopf (21) über eine Antriebseinrichtung (25, 26) an die Schmierstellen anstellbar und wieder rückstellbar ist,
- wenigstens einen Lagefühler (31) für den Abschmierstellen in ihrer Lage eindeutig zugeordnete und mit ihnen bewegte Teile,
- eine Steuereinrichtung (30), die in vorbestimmten Relativlagen der Abschmierstellen zur Schmiervorrichtung die Anstellung bzw. Rückstellung des Schmierkopfes (21) und die Betätigung der Fettpresse (25, 26) steuert, wobei
- zumindest der Schmierkopf (21) mit seiner Antriebseinrichtung (25, 26) auf einem Schlitten (5) angebracht ist, der über Mitnehmer (19) entlang eines Schmierweges an den die Abschmierstelle aufweisenden Teil ankuppelbar ist und nach dem jeweiligen Abschmiervorgang in seine Ausgangs-Wartestellung zurückkehrt,
- die Steuereinrichtung (30) während der Mitnahme des Schlittens (5) über den Schmierweg den Schmiervorgang und die An- und Rückstellung des Schmierkopfes (21) steuert und
- der Schlitten (5) mit der Anstell- bzw. Betatigungsvorrichtung (25, 26) des Schmierkopfes (21) und der Fettpresse antriebsverbunden ist,
**dadurch gekennzeichnet, daß** die Vorrichtung für eine von unten nach oben bewegte Kette mit nach außen überstehende, konzentrische Schmierstellen aufweisenden Kettenbolzen bestimmt ist, am Schlitten (5) oberhalb der Anstellachse des Schmierkopfes (21) Zentrierrollen (19) lagern, über die der ankommende Kettenbolzen den Schlitten (5) unter Zentrierung des Schmierkopfes (21) auf die jeweilige Schmierstelle über den Schmierweg mitnimmt, und die am Ende des Schmierweges in eine den Kettenbolzen freigebende Lage ausstellbar sind, wobei die Zentrierrollen (19) mit ihren Achsen (18) auf um zu diesen Achsen parallele Achsen (15) schwenkbaren Lenkern (16) am Schlitten (5) gelagert sind und feststehende Kulissenführungen für diese Lenker (16) bzw. die Drehachsen (18) der Zentrierrollen (19) den Schmierweg (11), in dem die Zentrierrollen (19) im Zentrierabstand gehalten werden, sowie einen anschließenden Freigabebereich (12) bestimmen, in dem die Zentrierrollen (19) unter Freigabe des Kettenbolzens auseinanderverstellbar sind, so daß der durch sein Eigengewicht und bzw./oder Rückstellfedern (6) im Rückstellsinn vorbelastete Schlitten in seine durch Anschläge (4a, 8, 9) bestimmte Ausgangs-Wartestellung zurückkehrt.

2. Vorrichtung nach Anspruch 1, dadurch gekennzeichnet, daß ein mit einem Puffer (9) versehener, die Ausgangslage des Schlittens (5) bestimmender Anschlag (8) durch Federn (6) und Gegenanschläge (4a) in der Anschlagstellung gehalten und gegen die Federn (6) aus dieser Lage nach unten verstellbar ist, wobei die Kulissenführungen (10) einen nach unten an den Beginn des Schmierweges (11) anschließenden, zusätzlichen Freigabebereich (13) bestimmen, so daß bei einem Rücklauf der Kette ein Austveichvorgang möglich ist.

3. Vorrichtung nach den Ansprüchen 1 und 2, dadurch gekennzeichnet, daß eine den Schlitten (5) abstützende, eine Schlittenverstellung nach oben und unten zulassende Führung (3, 4) ihrerseits in Querrichtung begrenzt verstellbar auf einer Tragkonstruktion (1, 2) abgestützt ist.

## Claims

1. A device for lubricating lubricating points formed, for example, by lubricating nipples, moving slowly along a line, more particularly for lubricating the chain bolts of grinder chains, comprising:
- a grease gun (21, 25, 26), the lubricating head (21) of which can be applied to and retracted from the lubricating points via a drive means (25, 26),
- at least one position sensor (31) for parts specifically associated with the lubricating points in respect of their position and moving therewith,
- a control device (30) which, in predetermined relative positions of the lubricating points to the lubricating device, controls the application and retraction of the lubricating head (21) and the actuation of the grease gun (25, 26),
- at least the lubricating head (21) with its drive means (25, 26) being disposed on a slide (5) which can be coupled to the part provided with the lubricating point along a lubricating path by way of drivers (19) and returning to its initial standby position after each lubricating operation,
- the control device (30) controlling the lubrication operation and the application and retraction of the lubricating head (21) during the entrainment of the slide (5) over the lubricating path and
- the slide (5) being drivingly connected to the application or actuation device (25, 26) of the lubricating head (21) end the grease gun,
characterised in that the device is intended for an upwardly moving chain having outwardly projecting chain bolts having concentric lubricating points, centring rollers (19) are mounted on the slide (5) above the application axis of the lubricating head (21), the oncoming chain bolt entraining the slide (5) over the lubricating path by way of said centring rollers while the lubricating head (21) is centred on the associated lubricating point, said centring rollers being extensible at the end of the lubricating path into a position which releases the chain bolt, the centring rollers (19) being mounted on the slide (5) with their shafts (18) on links (16) which are pivotable about axes (15) parallel to the said shafts, and fixed slotted guides for said links (16) and the shafts (18) of the centring rollers (19) define the lubricating path (11), in which the centring rollers (19) are kept at the centring distance, and an adjacent release zone (12) in which the centring rollers (19) can be moved apart to release the chain bolt, so that the slide, which is preloaded in the retraction direction by its own weight and/or by return springs (6), returns into its initial standby position which is defined by stops (4a, 8, 9).

2. A device according to claim 1, characterised in that a stop (8) having a buffer (9) and defining the initial position of the slide (5) is held in the abutment position by springs (6) end companion stops (4a) and can be moved down from this position against the springs (6), the slotted guides (10) defining an additional release zone (13) downwardly adjoining the start of the lubricating path (11), so that an evasive operation is possible in the event of a return movement of the chain.

3. A device according to claims 1 and 2, characterised in that a guide (3, 4) which supports the slide (5) and which allows slide movement upwardly and downwardly is in turn supported on a bearer structure (1, 2) so as to be movable to a limited degree in the transverse direction.

## Revendications

1. Dispositif destiné à graisser des points de graissage, constitués par exemple, par des graisseurs, qui se déplacent lentement le long d'une ligne, notamment à graisser les axes des chaînes de défibreurs qui comprend :
- une presse à graisse (21, 25, 26) dont la tête de graissage (21) peut être appliquée sur les points de graissage et rétractée au moyen d'un dispositif d'entraînement (25, 26),
- au moins un palpeur de position (31) destiné a palper des éléments associés qui ont une position relative définie par rapport aux points de graissage et qui se déplacent avec ces points,
- un dispositif de commande (30) qui, lorsque les points de graissage sa trouvent dans des positions relatives prédéterminées par rapport au dispositif de graissage, commande l'application et le retrait de la tête de graissage (21) et l'actionnement de la presse à graisse (25, 26),
et dans lequel
- au moins la tête de graissage (21) est montée, avec son dispositif d'entraînement (25, 26), sur un chariot (5) qui peut être accouplé à l'élément qui porte le point de graissage, sur la longueur d'une course de graissage, au moyen d'un organe entraîneur (19), et revient à sa position de départ-attente après l'exécution de l'opération de graissage,
- le dispositif de commande (30) commande l'opération de graissage ainsi que l'application et le retrait de la tête de graissage (21) pendant que le chariot (5) est entraîné sur la course de graissage,et
- le chariot (5) est relié cinématiquement au dispositif d'application et d'actionnement (25, 26) de la tête de graissage (21) et de la presse à graisse,
caractérisé en ce que le dispositif est conçu pour une chaîne qui se déplace de bas en haut et est munie d'axes de chaîne présentant des points de graissage concentriques, en saillie vers l'extérieur, il est prévu des rouleaux de centrage (19) qui tourillonnent sur le chariot (5), au-dessous de l'axe d'application de la tête de graissage (21), et par l'intermédiaire desquels l'axe de chaîne arrivant entraîne le chariot (5) sur la course de graissage en centrant en même temps la tête de graissage (21) sur le point de graissage considéré, et qui peuvent être ramenés dans une position qui libère l'axe de chaîne à la fin de la course de graissage, ces rouleaux de centrage (19) tourillonnant sur le chariot (5) par leurs axes (18), montés sur des bras (16) qui peuvent pivoter autour d'axes (15) parallèles à ces axes, et des guides à coulisse, qui agissent sur ces bras (16) ou sur les axes de rotation (18) des rouleaux de centrage (11), définissent la course de graissage dans laquelle les rouleaux de centrage (19) sont maintenus à un écartement de centrage, et définissent aussi une région de dégagement (12) qui y fait suite, et dans laquelle les rouleaux de centrage (19) peuvent s'écarter l'un de l'autre en dégageant l'axe de chaîne, de sorte que le chariot, qui est précontraint dans le sans du retrait par son propre poids et/ou par des ressorts do rappel (6), revient à sa position de départ-attente qui est définie par des butées (4a, 8, 9).

2. Dispositif selon la revendication 1, caractérisé en ce qu une butée (8) munie d'un tampon (9) et qui définit la position de départ du chariot (5) est maintenue dans la position de butée par des ressorts (6) et des contre-butées (4a) et peut être repoussée vers le bas à partir de cette position à l'encontre de l'action des ressorts (6), les guides à coulisse (10) définissant une région de dégagement additionnelle (13) qui se raccorde au début de la course de graissage (11) en se dirigeant vers le bas, de sorte qu'il peut se produire un dégagement lorsque la chaîne circule en marche arrière.

3. Dispositif selon les revendications 1 et 2, caractérisé en ce qu'un guide (3, 4) qui soutient le chariot (5), et qui admet le déplacement ascendant et descendant du chariot, est à son tour appuyé sur une construction porteuse (1, 2) de manière à pouvoir se déplacer dans la direction transversale sur une distance limitée.
